# EUROPÄISCHE PATENTANMELDUNG

(11) **EP 2 520 378 A2**
(43) Veröffentlichungstag der Anmeldung: **07.11.2012**
(21) Anmeldenummer: 12154689.9
(22) Anmeldetag: 09.02.2012
(51) Int. Cl.: B08B 9/00, B08B 3/02, F16J 15/16, F04B 53/00

(54) **Sperrwassersystem**

(30) Priorität: 03.05.2011 DE 102011075172
(71) Anmelder: Krones AG, 93073 Neutraubling (DE)
(72) Erfinder: Leutz, Dirk Dipl.-Ing., 84061 Ergoldsbach (DE)
(74) Vertreter: Grünecker, Kinkeldey, Stockmair & Schwanhäusser

(57) **Zusammenfassung**

Ein Sperrwassersystem (S) zur Spülung wenigstens einer Gleitringdichtung (G) in wenigstens einer Pumpe (P), mit einer die jeweilige Gleitringdichtung (G) mit Sperrwasser beaufschlagenden Versorgungspumpe (4), weist einen geschlossenen Kreislauf (1) auf, in welchem zum Beaufschlagen der jeweiligen Gleitringdichtung (G) gepumptes Sperrwasser auffangbar und rezirkulierbar ist.

## Beschreibung

Die Erfindung betrifft ein Sperrwassersystem gemäß Oberbegriff des Patentanspruchs 1.

In bekannten Sperrwassersystemen zur Spülung wenigstens einer Gleitringdichtung, beispielsweise in einer leistungsstarken Pumpe bei der Getränkebehandlung oder in der Getränke-Abfülltechnologie, wird das Sperrwasser, das gegebenenfalls kontaminiert ist, entsorgt oder abgelassen. Dies bedeutete eine erhebliche Wasservergeudung, die besonders in wasserarmen Regionen nachteilig, grundsätzlich teuer ist und die Umwelt belastet. Denn solche Sperrwassersysteme werden gegebenenfalls mit einem Sperrwasser-Durchsatz von 100 l/H oder mehr und gegebenenfalls im Dauerbetrieb eingesetzt. In der Bundesrepublik Deutschland kann ein Sperrwassersystem für eine Gleitringdichtung einer leistungsstarken Pumpe durchaus jährliche Wasserkosten zwischen € 3.000,-- bis € 15.000,-- verursachen, wobei nicht nur die Bereitstellungs- sondern auch Abwasser-Kosten zu berücksichtigen sind.

Der Erfindung liegt die Aufgabe zugrunde, ein kostengünstig und umweltfreundlich betreibbares Sperrwassersystem zu schaffen.

Die gestellte Aufgabe wird mit den Merkmalen des Patentanspruchs 1 gelöst.

In Abkehr vom bisher bekannten Prinzip, das Sperrwasser nach dem Spülen z.B. in den Gully zu entsorgen, wird erfindungsgemäß Sperrwasser stromab der jeweiligen Gleitringdichtung aufgefangen und rückgeführt und wieder verwendet. Dadurch ergibt sich eine erhebliche Wassereinsparung und wird die Umwelt entlastet.

Bei einer zweckmäßigen Ausführungsform ist im Kreislauf stromauf der jeweiligen Gleitringdichtung eine Sperrwasser-Temperatur-Einstellvorrichtung vorgesehen. Die Einstellvorrichtung ist zweckmäßig, weil sich das Sperrwasser im Langzeitbetrieb des Systems zunehmend erwärmen würde bzw. mit erhöhter Temperatur bereitgestellt wird oder bereitgestellt werden muss. Eine gleichbleibende und auf die Gleitringdichtung abgestimmte Temperatur ist für eine einwandfreie Funktion auch der Gleitringdichtung wichtig.

Besonders zweckmäßig ist aufgefangenes Sperrwasser regenerierbar, entweder in dem Kreislauf selbst oder in einer dem Kreislauf zugeordneten Aufbereitungsanlage. Beim Spülen der Gleitringdichtungen wird nämlich Sperrwasser kontaminiert, wobei die Kontamination gegebenenfalls nur über Filter nicht ausreichend aufgefangen werden kann. Allerdings können periodisch rückspülbare Filter dazu beitragen, stabilere Betriebskonditionen sicherzustellen. Zweckmäßig lässt sich das Sperrwassersystem jedoch manuell reinigen.

Bei einer zweckmäßigen Ausführungsform ist in den Kreislauf ein Sperrwasser-Vorlagebehälter eingegliedert, der eine für die Anzahl der Verbraucher mindestens ausreichende Sperrwasservorlage bereitstellt. Günstig ist dem Vorlagebehälter eine Frisch- oder Reinwasser-Nachspeisevorrichtung zugeordnet, da im Kreislauf und/oder an den Gleitringdichtungen Verluste entstehen können, die zu kompensieren sind. Auch bei der Reinigung des Systems von im benutzten Sperrwasser enthaltenen Kontaminationen können Sperrwasserverluste entstehen, die auszugleichen sind. Die Nachspeisevorrichtung kann beispielsweise schwimmerbetrieben werden, oder mit berührungslos arbeitenden Füllstandsmessorganen.

In einer zweckmäßigen Ausführungsform ist zwischen der Versorgungspumpe und der jeweiligen Gleitringdichtung als Sperrwasser-Temperatur-Einstelleinrichtung in einem Vorlauf ein Wärmetauscher installiert. Bei dem Wärmetauscher handelt es sich zweckmäßig um einen mit Kühlwasser betriebenen Kühler, der betriebsbedingte Temperatursteigerungen auffängt bzw. eine optimale Sperrwasser-Temperatur herstellt. Ein Kühler kann auch im Fall betreiberseitig sehr warm verfügbarem Frisch- oder Reinwasser zweckmäßig sein. In Einsatzfällen, in denen das Frisch- oder Reinwasser sehr warm zur Verfügung gestellt werden muss, ist dies von besonderem Vorteil.

Die Gleitringdichtung ist über einen Rücklauf für aufgefangenes Sperrwasser mit dem Sperrwasser-Vorlagebehälter verbunden, so dass der Kreislauf geschlossen wird. Vorzugsweise, ist im Rücklauf eine Rücklaufpumpe eingegliedert, die zur Zirkulation dient und im Zusammenspiel mit der Versorgungspumpe eine exakte Einstellung der Durchsatzrate an Sperrwasser über die Gleitringdichtung ermöglicht.

Das Sperrwassersystem kann nicht nur für eine Gleitringdichtung einer Pumpe oder wenigen Gleitringdichtungen derselben Pumpe verwendet werden, sondern für eine beliebige Anzahl an Verbrauchern in Form von Gleitringdichtungen, die bei einer Ausführungsform parallel an den Vorlauf angeschlossen werden, vorzugsweise stromab des Wärmetauschers. Der Rücklauf von jeder angeschlossenen Gleitringdichtung führt in einen gemeinsamen Hauptrücklauf des geschlossenen Kreislaufes, der direkt zum Vorlagebehälter führen kann. In diesem Fall werden sämtliche gespülten Gleitringdichtungen aus einer einzigen Versorgungspumpe beaufschlagt.

Alternativ könnte bei einer größeren Anzahl in das Sperrwassersystem eingegliederter Gleitringdichtungen jeweils eine Versorgungspumpe vorgesehen werden, so dass, gegebenenfalls, unterschiedliche Durchsatzraten einstellbar sind.

Speziell im Falle mehrerer in das Sperrwassersystem eingegliederter Gleitringdichtungen ist es zweckmäßig, wenn im Rücklauf zumindest einer Gleitringdichtung ein Druckausgleichsbehälter installiert ist, beispielsweise stromauf der jeweiligen Rücklaufpumpe. Der Druckausgleichsbehälter entkoppelt beispielsweise die ihm zugeordnete Gleitringdichtung hydraulisch von dem Rücklauf von anderen Gleitringdichtungen, um Druckschwankungen zu vermeiden, die durch unterschiedliche Leitungsquerschnitte, Leitungslängen, Start- und Stopp-Situationen zurückwirken.

Um einerseits keine Kontaminationen aus dem Vorlagebehälter zur jeweiligen Gleitringdichtung einzutragen, oder im Rücklauf Verschmutzungen am Erreichen des Vorlagebehälters zu hindern, können an der Druckseite der Versorgungspumpe und im Rücklauf oder Hauptrücklauf jeweils Filter installiert sein, deren Filtereinsätze periodisch gewechselt und/oder gereinigt werden, oder die periodisch rückgespült werden.

Das Sperrwassersystem wird von einer zweckmäßig programmierbaren Systemsteuerung geführt. In dem Sperrwasser-Vorlagebehälter und/oder dem Druckausgleichsbehälter wird zumindest eine Füllstandsmess- und/oder -überwachungssonde installiert, die mit der Systemsteuerung verbunden ist, um Fehlerkonditionen zu melden. Ein Sperrwasserverlust beispielsweise im Vorlagebehälter könnte einen Schaden an der Nachspeisevorrichtung oder im Rücklauf des Kreislaufes anzeigen, während ein Sperrwasserverlust im Druckausgleichsbehälter sogar auf einen möglichen Schaden in der Gleitringdichtung hinweisen kann.

Da das Sperrwassersystem aufgrund des rezirkulierten Sperrwassers im Langzeitbetrieb oder Dauerbetrieb einer zunehmenden Kontamination unterliegt, ist es zweckmäßig, beispielsweise dem Sperrwasser-Vorlagebehälter eine automatische oder manuelle Reinigungseinrichtung zuzuordnen. Der Vorlagebehälter könnte nach Art eines Abscheiders mit Abscheideeinrichtungen ausgebildet sein, wobei gegebenenfalls eine Reinigung und Entsorgung abgeschiedener Verunreinigungen ohne Betriebsunterbrechung vorzunehmen ist.

Anhand der Zeichnungen werden Ausführungsformen des Erfindungsgegenstandes erläutert. Es zeigen:
- Fig. 1: ein Blockschaltbild einer Ausführungsform eines Sperrwassersystems,
- Fig. 2: ein Blockschaltbild einer weiteren Ausführungsform eines Sperrwassersystems, und
- Fig. 3: eine schematische Querschnittsansicht einer Pumpe mit einer Gleitringdichtung, die in das Sperrwassersystem der Fig. 1 oder 2 eingegliedert sein kann.

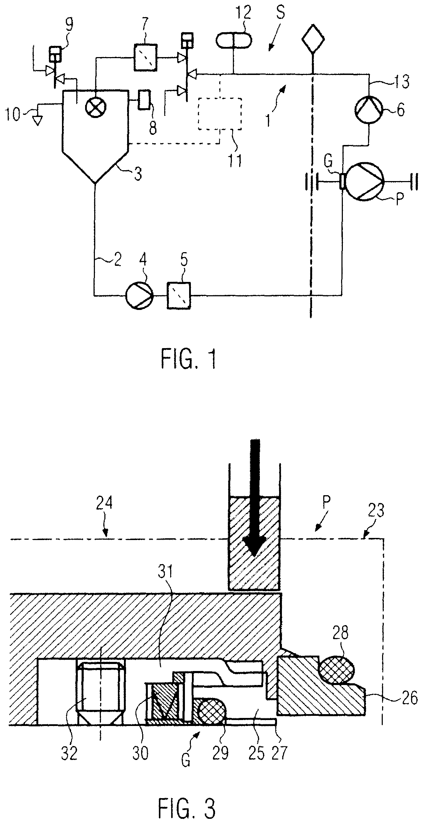

Gleitringdichtungen G, beispielsweise wie schematisch in Fig. 3 angedeutet, werden z.B. in leistungsfähigen Pumpen verwendet, weil sie gleichbleibende und gute Dichteigenschaften erbringen. Eine Gleitringdichtung G funktioniert am besten in einem vorbestimmten Temperaturbereich, weil dann ein bestimmtes Dichtspiel gehalten wird, das allerdings zu einer bestimmten Leckage durch die Gleitringdichtung führen kann. In Pumpen, die beispielsweise in der Getränkefördertechnologie oder Abfülltechnologie eingesetzt werden, dürfen geförderte Lebensmittelprodukte keiner Kontamination, beispielsweise aufgrund der Leckage von Gleitringdichtungen, unterliegen. Um einerseits bestimmte Betriebstemperaturen auch der Gleitringdichtungen einzustellen, andererseits Kontaminationen abzuführen bzw. am Vermischen mit dem geförderten Lebensmittelprodukt zu hindern, ist es üblich, Gleitringdichtungen mit Sperrwasser zu beaufschlagen.

Fig. 1 verdeutlicht ein Sperrwassersystem S für mindestens eine Gleitringdichtung G einer Pumpe P, die, wie angedeutet, einen stationären Pumpenteil und wenigstens einen rotierenden Pumpenteil aufweist, zwischen denen die Gleitringdichtung G abdichtet.

Das in Fig. 1 gezeigte Sperrwassersystem S weist einen geschlossenen Kreislauf 1 auf, der aus einem Vorlauf 2 ausgehend von einem Sperrwasser-Vorlagebehälter 3 und einem Rücklauf 13 zum Vorlagebehälter 3 besteht. Im Vorlauf ist eine Versorgungspumpe 4 für das Sperrwasser angeordnet, an deren Druckseite ein Filter 5 installiert sein kann. Im Rücklauf 13 kann eine Rücklaufpumpe 6 stromab der Gleitringdichtung G angeordnet sein, wie auch ein z.B. vor der Rückführung des Sperrwassers in den Vorlaufbehälter 3 weiterer Filter 7. Der Vorlagebehälter 3 kann mit wenigstens einer Füllstandsmess- und/oder -überwachungssonde 8 versehen sein, die an eine nicht gezeigte Systemsteuerung angeschlossen ist. Ferner weist, vorzugsweise, der Vorlagebehälter 3 oder der Kreislauf 1 selbst eine selbsttätige Nachspeisevorrichtung 9 für Frisch- und/oder Reinwasser auf, die betriebsbedingte Verluste an Sperrwasser ausgleicht. Zweckmäßig ist ferner der Vorlagebehälter 3 mit einer automatischen oder manuellen Reinigungseinrichtung (nicht gezeigt) versehen, gegebenenfalls auch mit einem Überlauf 10.

Gestrichelt ist alternativ eine zwischen dem Rücklauf 13 und dem Vorlagebehälter 3 eingegliederte Aufbereitungseinrichtung 11 für kontaminiertes aufgefangenes Sperrwasser vorgesehen. In einer weiteren Alternative könnte der Vorlagebehälter 3 nach Art eines Abscheiders ausgebildet sein, um im aufgefangenen Sperrwasser enthaltene Verunreinigungen auszuscheiden, so dass die Versorgungspumpe 4 Sperrwasser guter Qualität erhält.

Beispielsweise an den Rücklauf 13 kann eine Messeinrichtung 12 angeschlossen sein, die den Leitwert im Kreislauf 1 überwacht. Der Vorlagebehälter 3 könnte (nicht gezeigt) temperiert werden, um eine gleichbleibende Temperatur schon im Vorlauf 2 sicherzustellen. Falls die Pumpe P beispielsweise zwei Gleitringdichtungen G enthält, könnten diese gemeinsam in den Kreislauf 1 eingegliedert sein, um jeweils mit Sperrwasser einer bestimmten Temperatur und einer bestimmten Durchsatzrate beaufschlagt zu werden. Die Durchsatzrate kann beispielsweise etwa 100 l/h betragen, oder auch mehr.

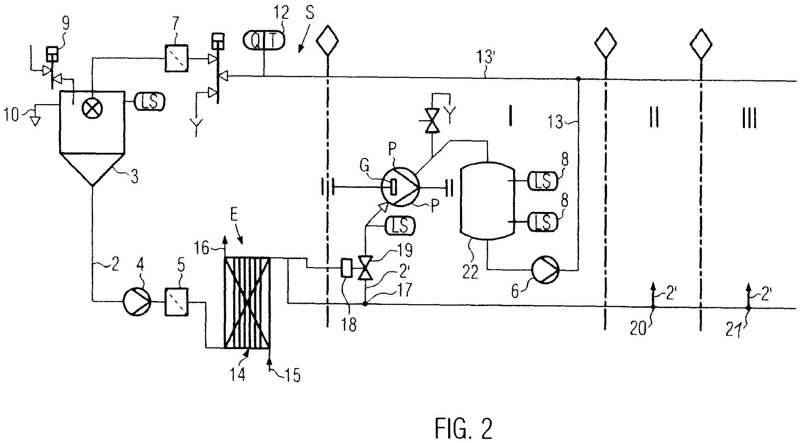

In der Ausführungsform des Sperrwassersystems S in Fig. 2 wird zunächst ebenfalls die Gleitringdichtung G der Pumpe P mit Sperrwasser ähnlich wie in der Ausführungsform in Fig. 1 beaufschlagt, wobei eingesetztes Sperrwasser stromab der Gleitringdichtung G aufgefangen und über den Rücklauf 13 über einen Hauptrücklauf 13' in den Sperrwasser-Vorlagebehälter 3 zurückgeführt wird.

Zwischen der Versorgungspumpe 4 und einem Schaltventil 19 in einem Vorlaufzweig 2', der an einem Knoten 17 von dem Vorlauf 2 abzweigt, ist ein Wärmetauscher 14 angeordnet, der die Betriebstemperatur des eingesetzten Sperrwassers einstellt, und als Sperrwasser-Temperatur-Einstelleinrichtung E fungiert. Der Wärmetauscher 14 ist beispielsweise ein Kühler, der über Leitungen 15, 16 mit Kühlwasser beaufschlagt wird. Das Schaltventil 19 wird beispielsweise über einen Servozylinder 18 geschaltet, um die Gleitringdichtung G zu spülen.

Als weitere Alternative ist in Fig. 2 im Rücklauf 13 zwischen der Gleitringdichtung G und stromauf der Rücklaufpumpe 6 ein Druckausgleichsbehälter 22 vorgesehen, der ebenfalls mit wenigstens einer Füllstandsmess- und/oder -überwachungssonde 8 bestückt sein kann. Der Druckausgleichsbehälter 22 vermeidet Druckschwankungen beim Spülen der Gleitringdichtung G, und ist besonders zweckmäßig, wenn, wie in Fig. 2, mehrere Gleitringdichtungen (nicht gezeigt) parallel über Knoten 20, 21 und Vorlaufzweige 2' parallel an den Vorlauf 2 angeschlossen sind, die in Fig. 2 alle von einer einzigen Versorgungspumpe 4 beaufschlagt werden, und analog zu der gezeigten Gleitringdichtung G verschaltet sein können, beispielsweise mit Schaltventilen 19. Diese mehreren Gleitringdichtungen bilden mehrere parallel versorgte Verbraucher I, II, III usw. im Sperrwassersystem S und sind mit ihren Rückläufen 13 an den Hauptrücklauf 13' zum Vorlagebehälter 3 angeschlossen. In jedem Rücklauf 13 kann ein Druckausgleichsbehälter 22 vorgesehen sein, oder zumindest in einem Rücklauf 13.

Bei einer weiteren, nicht gezeigten Alternative könnte der Vorlauf 2 in entsprechend viele Vorlaufzweige 2' aufgezweigt und in jedem Vorlaufzweig 2' eine eigene Versorgungspumpe 4 enthalten, gegebenenfalls kombiniert mit jeweils einem Filter 5 und/oder einer Wärmetauschsektion analog zum Wärmetauscher 14.

Die in Fig. 3 schematisch und ausschnittsweise gezeigte Pumpe P weist einen stationären Pumpenteil 23 und einen rotierenden Pumpenteil 24 auf, zwischen denen in einer Dichtebene 27 ein rotierender Gleitring 25 mit einer Kreisring-Dichtfläche mit einem stationären Gleitring 26 zusammenwirkt. 28 und 29 sind beispielsweise O-Ringe, die als Sekundärdichtungen fungieren. Der rotierende Gleitring 25 wird durch eine Federeinrichtung 30 gegen den stationären Gleitring 26 gepresst und von einem Mitnehmer 31 geschleppt, der über eine Schraubverbindung 32 zur Drehmomentübertragung eingesetzt werden kann. Beispielsweise der Bereich, den an der Gleitringdichtung G die Nebendichtungen 29, 28 begrenzen, kann mit dem Sperrwasser des Sperrwassersystems S in den Fig. 1 oder Fig. 2 beaufschlagt d.h. gespült werden. Das eingesetzte Sperrwasser hält nicht nur eine vorbestimmte Betriebstemperatur der Gleitringdichtung G, sondern spült auftretende Leckagen oder Kontaminationen aus.

## Patentansprüche

1. Sperrwassersystem (S) zur Spülung wenigstens einer Gleitringdichtung (G), insbesondere in wenigstens einer Pumpe (P), mit einer die jeweilige Gleitringdichtung (G) mit Sperrwasser beaufschlagenden Versorgungspumpe (4), **dadurch gekennzeichnet, dass** das Sperrwassersystem (S) einen geschlossenen Kreislauf (1) aufweist, in welchem zum Beaufschlagen der jeweiligen Gleitringdichtung (G) gepumptes Sperrwasser auffangbar und rezirkulierbar ist.

2. Sperrwassersystem nach Anspruch 1, **dadurch gekennzeichnet, dass** im Kreislauf (1) stromauf der jeweiligen Gleitringdichtung (G) eine Sperrwasser-Temperatur-Einstellvorrichtung (E) vorgesehen ist.

3. Sperrwassersystem nach Anspruch 1, **dadurch gekennzeichnet, dass** aufgefangenes Sperrwasser regenerierbar ist, vorzugsweise im Kreislauf (1) oder in einer dem Kreislauf (1) zugeordneten Aufbereitungsanlage (11).

4. Sperrwassersystem nach Anspruch 1, **dadurch gekennzeichnet, dass** wenigstens ein Sperrwasser-Vorlagebehälter (3) in den Kreislauf (1) eingegliedert ist, vorzugsweise ein Sperrwasser-Vorlaufbehälter (3) mit Reinwasser-Nachspeisevorrichtung (9).

5. Sperrwassersystem nach Anspruch 2, **dadurch gekennzeichnet, dass** in einem Vorlauf (2) als Sperrwasser-Temperatur-Einstelleinrichtung (E) zwischen der Versorgungspumpe (4) und der jeweiligen Gleitringdichtung (G) ein Wärmetauscher (14), vorzugsweise ein mit Kühlwasser betriebener Kühler, installiert ist.

6. Sperrwassersystem nach Anspruch 1, **dadurch gekennzeichnet, dass** die Gleitringdichtung (G) über einen Rücklauf (13) für aufgefangenes Sperrwasser mit dem Sperrwasser-Vorlagebehälter (3) verbunden ist, vorzugsweise mit einer in den Rücklauf (13) eingegliederten Rücklaufpumpe (6).

7. Sperrwassersystem nach wenigstens einem der vorhergehenden Ansprüche, **dadurch gekennzeichnet, dass** an die Versorgungspumpe (4) im Vorlauf (2) parallel mehrere Gleitringdichtungen (G) angeschlossen sind, vorzugsweise stromab des Wärmetauschers (14), und dass der Rücklauf (13) von jeder Gleitringdichtung (G) an einen gemeinsamen Hauptrücklauf (13') angeschlossen ist.

8. Sperrwassersystem nach wenigstens einem der Ansprüche 1 bis 6, **dadurch gekennzeichnet, dass** im Kreislauf (1) an einen gemeinsamen Sperrwasser-Vorlagebehälter (3) über aufgezweigte Vorläufe (2, 2') mit jeweils einer Versorgungspumpe (4) parallel mehrere Gleitringdichtungen (G) angeschlossen sind.

9. Sperrwassersystem nach wenigstens einem der vorhergehenden Ansprüche, **dadurch gekennzeichnet, dass** im Rücklauf (13) zumindest von einer Gleitringdichtung (G) ein Druckausgleichsbehälter (22) installiert ist, vorzugsweise stromauf der Rücklaufpumpe (6).

10. Sperrwassersystem nach wenigstens einem der vorhergehenden Ansprüche, **dadurch gekennzeichnet, dass** an der Druckseite der Versorgungspumpe (4) und, vorzugsweise, im Rücklauf (13) oder Hauptrücklauf (13') jeweils ein Filter (5, 7) installiert ist.

11. Sperrwassersystem nach wenigstens einem der vorhergehenden Ansprüche, **dadurch gekennzeichnet, dass** in dem Sperrwasser-Vorlagebehälter (3) und/oder dem Druckausgleichsbehälter (22) zumindest eine Füllstandsmess- und/oder -überwachungssonde (8) installiert, und, vorzugsweise, mit einer Systemsteuerung verbunden ist.

12. Sperrwassersystem nach Anspruch 4, **dadurch gekennzeichnet, dass** dem Sperrwasser-Vorlagebehälter (3) eine automatische oder manuelle Reinigungseinrichtung (10) zugeordnet ist.
